# EUROPEAN PATENT SPECIFICATION

(11) **EP 0 347 259 B1**
(45) Date of publication and mention of the grant of the patent: **14.08.1996**
(21) Application number: 89306165.5
(22) Date of filing: 19.06.1989
(51) Int. Cl.: F16D 13/68

(54) **Torsional vibration absorbing device for automotive power train**
Torsionsschwingungsdämpfer für Kraftfahrzeugantrieb
Amortisseur de vibrations de torsion pour transmission de puissance de véhicule automobile

(30) Priority: 17.06.1988 JP 149468/88; 17.06.1988 JP 149469/88; 17.06.1988 JP 149470/88; 18.06.1988 JP 151025/88
(43) Date of publication of application: 20.12.1989
(73) Proprietor: UNISIA JECS CORPORATION, Atsugi-shi Kanagawa-ken (JP)
(72) Inventor: Kohno, Satoshi c/o Atsugi Motor Co., Ltd., Atsugi-shi Kanagawa-ken (JP)
(74) Representative: Blanco White, Henry Nicholas

(56) References cited:
- EP-A- 0 110 553
- DE-A- 3 322 412
- FR-A- 2 633 685

## Description

The present invention relates generally to a torsional vibration absorbing device for a power train in an automotive vehicle. More specifically, the invention relates to a torsional vibration absorbing mechanism suitable to be employed in an automotive clutch disc assembly for the power train, which is provided enhanced durability.

In general, a clutch disc assembly for an automotive power train transmit an engine output torque via a clutch facing, a drive plate and a hub to an output shaft. A resilient member is disposed between the drive plate and hub for permitting relative rotational movement of the drive plate and hub. Permission of relative rotational movement between the drive plate and hub by means of a resilient member is effective for absorbing vibration caused by fluctuation of the engine output torque.

For example, such vibration absorbing device has been proposed in JP-A 62-184229, on which the preamble of claim 1 is based. The disclosed invention is intended to effectively absorb torsional vibration caused by the engine output torque fluctuation which can become substantial in engine low load range, such as an engine idling condition. In order to effectively absorb torsional torque, the proposed device is provided with an Inner and outer hubs mutually separated to each other. The output shaft is coupled with the inner hub. The outer hub is engaged with the the inner hub in a manner to be allowed to cause a predetermined angle of relative angular displacement. Springs with relatively smaller spring coefficient are disposed between the inner and outer hubs for coupling each other. On the other hand, springs with relatively greater spring coefficient are disposed between the outer hub and the drive plate so as to establishing mutual coupling of the outer hub and the drive plate in such a manner that the outer hub and the drive plate are permitted to cause relative angular displacement. The springs between the inner and outer hub are arranged so that they becomes active in advance of the timing at which the springs between the outer hub and the drive plate becomes active. Furthermore, the outer hub and the drive plate are provided greater displacement angle than that permitted between the inner and outer hubs.

An idler is externally coupled with the outer hub so as to be permitted relative angular displacement with the latter by means of a plurality of coil springs disposed therebetween. These coil springs are engaged with the drive plate so as to provide long spring stroke. While the clutch is engaged, the drive plate and the outer hub are caused angular shift with compressing the coil springs, the spring force of the coil springs is concentrated onto a radial arm of the idler and a hub arm of the outer hub to cause fatigue of the outer hub and the idler.

On the other hand, in the disclosed prior art, the inner and outer hubs are established into interengagement by means of external projection of the inner hub and the internal projection of the outer hub. These external and internal hub are exerted shearing force. In order to resist against this shearing force, the thicknesses of the inner hub and outer hub has to be thick enough. This clearly increased the weight of the clutch disc assembly as assembly.

In addition, while the clutch is engaged to cause relative angular displacement of the idler relative to the drive plate and the outer hub, metal contact of the contacting surfaces is caused, creating unnecessary frictional force.

Therefore, it is an object of the present invention to provide a clutch disc assembly which can solve the defects in the prior art set forth above and thus provide improved durability and enhanced performance.

Another object of the invention is to provide a clutch disc assembly which can successfully reduce fatigue of the hub and the idler.

A further object of the invention is to provide a clutch disc assembly which can reduce required thickness of the inner and outer hubs.

A still further object of the invention is to provide a clutch disc assembly which can reduce shearing force to be exerted on the inner and outer hubs.

The invention provides a torsional vibration absorbing device in a clutch disc assembly comprising: a drive plate having means releasably coupled with a driving torque source to be rotatingly driven by the output torque of said driving torque source while it is coupled therewith; a first hub member frictionally associated with said drive plate for rotation therewith; an idler member associated with said first hub member for rotation therewith; a first torsional vibration absorbing mechanism provided between said first hub member and said idler member for permitting relative angular displacement therebetween within a first predetermined angular range, said first torsional vibration absorbing mechanism including a first resilient member having a first resilient characteristic; a second hub member rigidly associated with an output shaft through which a driving torque of said driving torque source is transmitted to an external load, and frictionally associated with said first hub member so as to be rotationally driven according to rotation of the latter; a second torsional vibration absorbing mechanism interposed between said first and second hub members for permitting relative angular displacement between said first and second hub members within a second predetermined angular range which is smaller than said first predetermined angular range, said second torsional vibration absorbing mechanism including a second resilient member having a second resilient characteristic which is smaller than said first resilient characteristic; wherein said idler member and said first hub member have opposed first and second spring seat surfaces, in spaced apart relationship with each other, on which respective ends of said first resilient member are seated; and wherein said idler member has an inner surface mating with the outer periphery of said first hub member; characterised in that a hardened layer is provided on at least one of mating surfaces of said first and second hub members; in that a hardened layer is provided on the said spring seat surfaces of the idler member and of the first hub member, and in that a lubrication layer is interposed between the said inner surface of the idler member and the said outer periphery of the said first hub member, and between adjacent surfaces of the idler member and the drive plate.

Preferably, the hardened layer on the said at least one mating surface of the first and second hub members is formed by electroless nickel plating.

on the other hand, the hardened layer formed on the opposed surfaces of the idler member and the first hub member is preferably formed by a shot-peening process.

In the further alternative, the second torsional vibration absorbing means may include means for limiting angular range of relative displacement between the drive plate and the first hub member within the second angular range, which angular range limiting means comprises a first projection extending from the first hub member and a second projection extending from the second hub member, which first and second projections have edge surfaces interengageable to each other at the end of angular range of relative displacement, and a hardened layer is formed on the edge surfaces of the first and second projections. The second projection may have a transverse thickness greater than that of the first projection.

The present invention will be understood more fully from the detailed description given herebelow and from the accompanying drawings of the preferred embodiment of the invention, which, however, should not be limited to the specific embodiments, but are for explanation and understanding only.

In the drawings:
Fig. 1 is a cross section of the preferred embodiment of a clutch disc assembly, according to the present invention;
Fig. 2 is a partially cut front elevation of the clutch disc assembly of Fig. 1; and
Fig. 3 is a front elevation showing interengagement condition of inner and outer hubs.

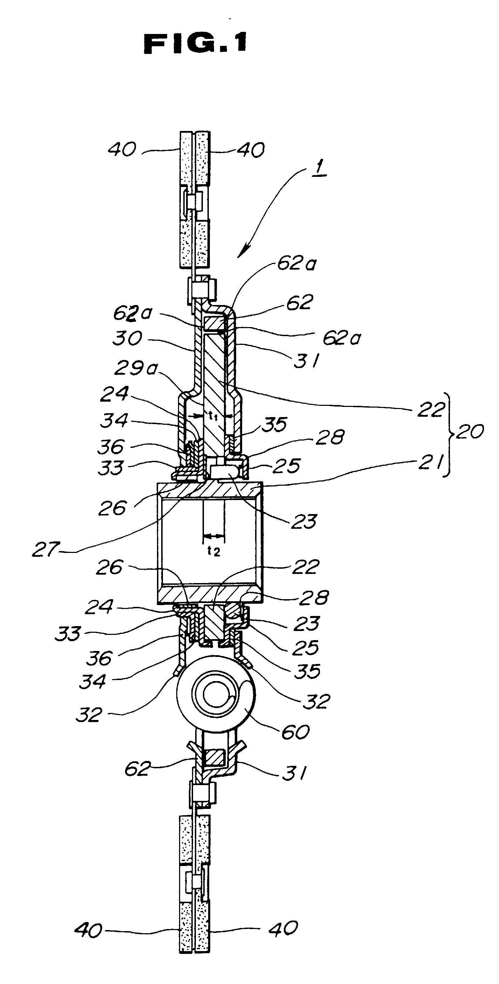

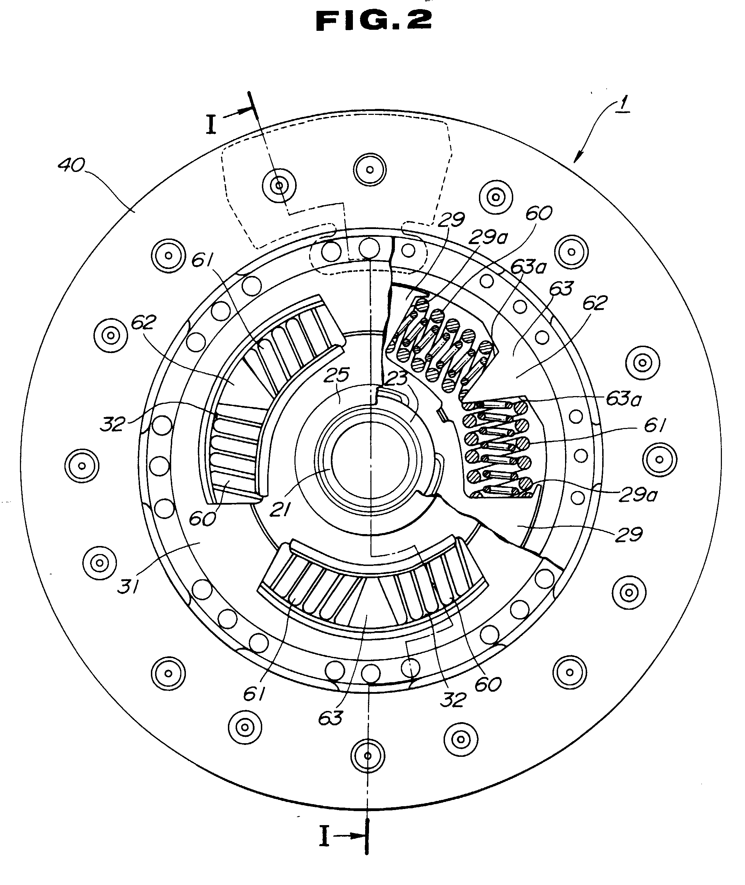

Referring now to the drawings, particularly to Figs. 1 and 2, the preferred embodiment of the torsional vibration absorbing device is incorporated in a clutch disc assembly 1 in a power train for transmitting an output torque to an automotive engine to driving wheels. The clutch disc assembly 1 generally comprises a hub 20, a pair of drive plates 30 and 31 and friction plates 40. The drive plates 30 and 31 are provided in a manner that they are permitted to cause relative angular displacement over a predetermined angle with respect to the hub 20. The friction plates 40 are of essentially annular disc shaped configuration and supported on the outer circumference of the drive plates 30 and 31.

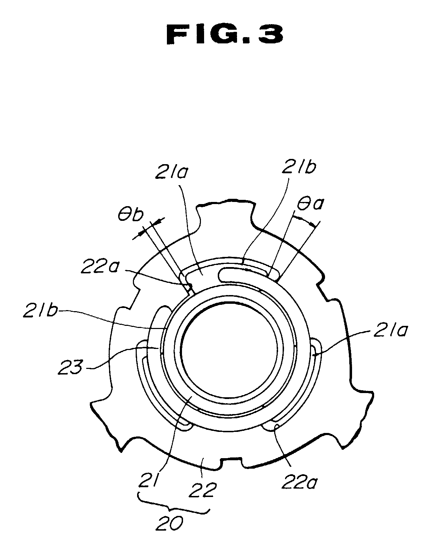

The hub 20 comprises an inner hub 21 and an outer hub 22. As particularly seen from Fig. 3, the inner and outer hubs 21 and 22 are coaxially arranged to each other. The inner hub 21 is splined with an output shaft (not shown). An essentially C-shaped spring 23 is disposed between the inner and outer hubs 21 and 22 so that the outer hub 22 may be coupled with the inner hub with capability of relative angular displacement for a predetermined angle with respect to the inner hub 21. One end of the spring is engaged with the inner hub 21 and the other end is engaged with the outer hub 22. The inner hub 21 has an outwardly extending projection 21a. On the other hand, the outer hub 22 is formed with a cut-out 22a. The circumferential length of the cut-out 22a is longer than that of the projection 21a so that relative angular displacement of the inner and outer hubs 21 and 22 is permitted in a magnitude defined by the difference of the circumferential lengthes of the cut-out 22a and the projection 21a. Namely, in the position shown in Fig. 3, the relative displacement in clockwise direction is permitted in a magnitude of θₐ and the relative displacement in counter clockwise direction is permitted in a magnitude of θ_{b}. While the inner and outer hubs 21 and 22 are displaced, the spring 23 accumulates the spring force for biasing the the inner and outer hubs to the neutral positions.

Mutually mating circumferential surfaces of the inner and outer hubs 21 and 22 are subject substantial concentration of the driving force. Therefore, a hardened layer 21b is formed by way of electroless nickel plating in order to provide increased mechanical strength and higher wear resistance. Furthermore, such a hardened layer 21b is effective for protecting the projections 21a and the cut-outs 22a from plastic deformation.

In addition, as can be seen from Fig. 1, the thickness t₁ of the projections 21a is greater than the thickness t₂ of the cut-outs 22a, which thickness of cut-outs corresponds to the thickness of the outer hub 22. This construction is advantageously employed for providing sufficient shearing resistance for the projection without causing substantial increase of the thickness of the hubs.

Sub-plates 24 and 25 are fitted at both sides of the inner circumferential edge portion of the outer hub 22. These sub-plates 24 and 25 are rotatable with the outer hub 22. Between the inner circumferential edge of the sub-plate 24 and the outer periphery of the inner hub 21, a low friction member 26, such as a needle bearing, is provided for reducing friction. This makes relative angular displacement smoother. In addition, an annular disc shaped friction plate 27 is interposed between the inner and outer hubs 21 and 22 in order to providing frictional damping force against relative angular displacement. In order to establish stable frictional contact between the annular disc plate 27 and the sub-plate 24 and the inner hub 21, an annular waved surface disc 28 is provided on the inner periphery of the sub-plate 25. The annular wave surface disc 28 resiliently exerts biasing force which assist stabilization of the contact pressure between the sub-plate 24 and the annular disc plate 27 and between the inner hub 21 and the annular disc plate 27.

The outer hub 22 is provided radially extending hub arms 29 with circumferentially equal distances. In the shown embodiment, the outer hub 22 is provided three hub arms 29. Between adjacent paire of hub arms 29, coil springs 60 and 61 are provided in circumferential alignment via radial arms of idler members 62. Edges of the hub arms 29 of the outer hub 22 and edges of the radial arms 63 of the idler member 62 which mate with springs 60, 61 are formed with hardened layer 29a and 63a by way of shot-peening or so forth. These hardened layer 29a and 63a are hardened to provide enhanced mechanical strength and wear-resistance.

It should be noted that though the shown embodiment forms the hardened layers 29a and 63a by way of shot-peening, it may also be possible to use electroless plating, such as electroless nickel plating. Also, it may be possible to perform surface processing for forming the hardened layers in various ways other than electroless plating.

The drive plates 30 and 31 are provided at both sides of the outer hub 22. The drive plates 30 and 31 are formed with window-like openings 32 having circumferential length corresponding to the circumferential length of the hub arms 29 are formed. Coil sprirlgs 60 and 61 are disposed within the openings 32. One ends of the coil springs 60 and 61 are engaged with the edge of the openings 32. The other ends of the coil springs 60 and 61 are seated on the edge of the hub arm 29. These coil springs 60 and 61 are provided in circumferential alignment and arranged for acting in series in response to relative angular displacement between the outer hub 22 and the drive plates 30 and 31.

The idler member 62 is formed with a lubrication layer 62a on the surfaces mating with the drive plates 30 and 31 and with the outer circumferential edge of the outer hub 22. In the preferred construction, the lubrication layer 62a are formed by desulfic molybdenum. In the alternative, the lubrication layer 62a may be formed of fine ceramics, materials such as polytetrafluoroehtylene, low frictional synthetic resin and so forth. The lubrication layer 62a on the idler member 62 reduces frictional resistance so as to assist for establishing steady coupling between the drive plates 30 and 31 with the outer hub 22 via the friction members 34 and 35.

Between the sub-plates 24 and 25 attached to the outer plate 22 and the drive plates 30 and 31, annular friction members 34 and 35 are disposed in order to provide frictional resistance against sub-plates 24 and 25 and the drive plates 30 and 31. A disc shaped spring 36 is disposed between the friction member 34 and the drive plate 30. The disc shaped spring 36 is arranged for exerting axial force for the friction members 34 and 35 for stably establishing frictional engagement between the friction members 34 and 35 and the sub-plate 24 and 25 and between the friction members and the drive plates 30 and 31.

The torsion spring 23 disposed between the inner hub 21 and the outer hub 22 is provided relatively small spring coefficient. On the other hand, the coil springs 60 and 61 disposed between the hub 20 and the drive plates 30 and 31 are provided relatively large spring force. The spring 23 having relatively small spring coefficient of the spring 23 is cooperated with the friction member 27 having relatively small friction coefficient, for absorbing torsional vibration caused due to torque fluctuation in low torque range. On the other hand, the coil springs 60 and 61 are cooperated with the friction members 34 and 35 for absorbing torsional vibration caused due to torque fluctuation in relatively great torque range.

The preferred embodiment of the clutch disc assembly according to the present invention, constructed as set forth above, is assembled into a clutch unit which is provided for connecting and disconnecting the automotive engine to and from the power train. As is well known, the friction disc 40 of the clutch disc assembly as assembled into the clutch unit, is associated with a flywheel (not shown) of the engine to be engaged and disengaged therewith so that the engine output torque is transmitted to the driven wheels via the power train when the frictional engagement between the friction disc 40 and the flywheel is established. Since the friction disc 40 is fixed with the drive plates 30 and 31, the drive plates are rotatingly driven by the engine output torque transmitted through the friction disc engaged with the flywheel.

The driving torque transmitted to the drive plates 30 and 31 is transmitted to the outer hub 22 via the friction members 34 and 35. Therefore, the outer hub 22 is driven to rotate. The rotational torque of the outer hub 22 is initially transmitted to the inner hub 21 via the friction member 27 with permitting the relative angular displacement between the inner and outer hubs 21 and 22 within the limited angular range. At the end of the relative angular displacement between the inner and outer hubs 21 and 22, the interengagement between the radially extending edge of the projection 21a and the radially extending edge of the cut-out 22a is established to establish mechanical or rigid power transmission. With this arrangement, the spring 23 is active for absorbing torsional vibration. At this time, the friction member 27 disposed between the inner and outer hubs 21 and 22 serves to provide resistance against relative angular displacement for damping vibration energy. On the other hand, the low friction member 26 disposed between the inner and outer hubs 21 and 22 serves for smoother relative angular movement thereof.

In addition, the annular waved surface disc 28 provides resilient biasing force for establishing stable frictional engagement between the sub-plate 25 of the outer hub 22 and the friction member 27 and between the friction member and the inner hub 21 for stability of torsional vibration absorbing performance of the mechanism set forth above.

After mechanical and rigid engagement between the projection 21a and the cut-out 22a is established so as to drive the inner and outer hubs 21 and 22 in an integral form, absorption of the torsional vibration is performed by the coil springs 60 and 61. The friction members 34 and 35 are also active for absorbing torsional vibration, at this time. Namely, since the coil springs 60 and 61 are disposed between the hub arms 29 and the drive plates 30 and 31 and since the pair of the coil springs 60 and 61 are arranged in circumferential alignment with each other for forming a tandem spring layout, the angular range to permit relative displacement between the outer hub 22 and the drive plate 30 and 31 can be wide for torsional vibration absorption in wide torque range.

It should be appreciated that though the shown embodiment employs the sub-plate 24 fixed to the outer hub to establish frictional engagement with the friction member 27 for coupling the inner and outer hubs 21 and 22, it is of course possible to establish direct contact with the outer hub 22 and the friction member 27 for coupling with the inner hub 21. Also, the needle bearing 26 may be replaced with plane bearing with low friction coated or low friction plated bearing surface. In the later case, the low friction plating may comprise chromium or nickel plating layer formed on the bearing surface. In addition, though the shown embodiment provides the springs disposed between the inner and outer hubs 21 and 22 in a form that both ends thereof are directly connected thereto, it may be possible to dispose the spring 23 between the sub-plate 24 and the inner hub 21.

It should be further noted that the hardening of the surface may be formed on the overall surfaces of the idler member 62 and the outer hub 22 instead of that for the limited surfaces 29a and 63a as disclosed

hereabove. Though the shown embodiment is principally directed to the clutch disc assembly for the clutch unit for connecting and the disconnecting the automotive engine to and from the power train, it is also possible to employ the proposed construction of the clutch disc assembly for a lock-up clutch in an lock-up type automotive power transmission for frictional driving transmitting capacity.

## Claims

1. A torsional vibration absorbing device in a clutch disc assembly comprising: a drive plate (30, 31) having means (40) releasably coupled with a driving torque source to be rotatingly driven by the output torque of said driving torque source while it is coupled therewith; a first hub member (22) frictionally associated with said drive plate (30, 31) for rotation therewith; an idler member (62) associated with said first hub member (22) for rotation therewith; a first torsional vibration absorbing mechanism provided between said first hub member (22) and said idler member (62) for permitting relative angular displacement therebetween within a first predetermined angular range, said first torsional vibration absorbing mechanism including a first resilient member (60, 61) having a first resilient characteristic; a second hub member (21) rigidly associated with an output shaft through which a driving torque of said driving torque source is transmitted to an external load, and frictionally associated with said first hub member (22) so as to be rotationally driven according to rotation of the latter; a second torsional vibration absorbing mechanism interposed between said first and second hub members (22, 21) for permitting relative angular displacement between said first and second hub members (22, 21) within a second predetermined angular range which is smaller than said first predetermined angular range, said second torsional vibration absorbing mechanism including a second resilient member (23) having a second resilient characteristic which is smaller than said first resilient characteristic; wherein said idler member (62) and said first hub member (22) have opposed first and second spring seat surfaces, in spaced apart relationship with each other, on which respective ends of said first resilient member (60, 61) are seated; and wherein said idler member (62) has an inner surface mating with the outer periphery of said first hub mmeber (22); characterised in that a hardened layer (21b) is provided on at least one of mating surfaces of said first and second hub members (22, 21); in that a hardened layer (29a, 63a) is provided on the said spring seat surfaces of the idler member (62) and of the first hub member (22), and in that a lubrication layer (62a) is interposed between the said inner surface of the idler member (62) and the said outer periphery of the said first hub member (22), and between adjacent surfaces of the idler member (62) and the drive plate (30, 31).

2. A torsional vibration absorbing mechanism as set forth in claim 1, wherein at least one of said hardened layers (21b, 29a, 63a) is formed by electroless nickel plating.

3. A torsional vibration absorbing mechanism as set forth in claim 1, wherein at least one of said hardened layers (29a, 63a) is formed through shot-peening process.

4. A torsional vibration absorbing mechanism as set forth in any one of claims 1 to 3, wherein said second torsional vibration absorbing means includes means for limiting angular range of relative displacement between said first and said second hub members (22,21) within said second angular range, which angular range limiting means comprises a first projection extending from said first hub member and a second projection extending from said second hub member, which first and second projections (21a, 22a) have edge surfaces interengageable to each other at the end of angular range of relative displacement, and a hardened layer (21b) is formed on said edge surfaces of said first and second projections (21a,22a).

5. A torsional vibration absorbing mechanism as set forth in claim 4, wherein said second projection (22a) has a transverse thickness greater than that of said first protection (21a).

## Patentansprüche

1. Eine Torsionsschwingungsdämpfungsvorrichtung in einer Kupplungsscheibenvorrichtung, umfassend:
eine Antriebsplatte (30, 31) mit einer Einrichtung (40), die lösbar mit einer Antriebsdrehmomentquelle gekoppelt ist, um durch das Ausgangsdrehmoment der genannten Antriebsdrehmomentquelle drehangetrieben zu werden, während sie damit gekuppelt ist; ein erstes Nabenelement (22), das reibungsmäßig mit der genannten Antriebsplatte (30, 31) zur Drehung damit verbunden ist; ein Leerlaufelement (62), das mit dem genannten ersten Nabenelement (22) zur Drehung damit verbunden ist; ein erster Torsionsschwingungsdämpfungsmechanismus, der zwischen dem genannten ersten Nabenelement (22) und dem genannten Leerlaufelement (62) vorgesehen ist, um eine relative Winkelverschiebung dazwischen innerhalb eines ersten, vorbestimmten Winkelbereiches zu erlauben, wobei der genannte erste Torsionsschwingungsdämpfungsmechanismus einschließt ein erstes, elastisches Element (60, 61), das eine erste, elastische Eigenschaft hat; ein zweites Nabenelement (21), das starr mit einer Ausgangswelle verbunden ist, über die ein Antriebsdrehmoment der genannten Antriebsdrehmomentquelle auf eine äußere Last übertragen wird, und reibungsmäßig mit dem genannten ersten Nabenelement (22) verbunden ist, so daß es gemäß der Drehung von letzterem drehangetrieben wird; ein zweiter Torsionsschwingungsdämpfungsmechanismus, der zwischen das genannte erste und zweite Nabenelement (22, 21) eingefügt ist, um eine relative Winkelverschiebung zwischen dem genannten ersten und zweiten Nabenelement (22, 21) innerhalb eines zweiten, vorbestimmten Winkelbereiches zu erlauben, der kleiner als der genannte erste, vorbestimmte Winkelbereich ist, wobei der genannte zweite Torsionsschwingungsdämpfungsmechanismus einschließt ein zweites, elastisches Element (23) mit einer zweiten, elastischen Charakteristik, die kleiner als die genannte erste, elastische Charakteristik ist; worin das genannte Leerlaufelement (62) und das genannte erste Nabenelement (22) entgegengesetzte erste und zweite Federsitzoberflächen in zueinander beabstandeter Beziehung haben, auf die entsprechende Enden des genannten ersten, elastischen Elements (60, 61) gesetzt werden; und worin das genannte Leerlaufelement (62) eine innere Oberfläche hat, die zu dem äußeren Umfang des genannten ersten Nabenelements (22) paßt; **dadurch gekennzeichnet**, daß eine gehärtete Schicht (21b) auf mindestens einer der zugehörigen Oberflächen des genannten ersten und zweiten Nabenelements (22, 21) vorgesehen ist; daß eine gehärtete Schicht (29a, 63a) auf den genannten Federsitzoberflächen des Leerlaufelements (62) und des ersten Nabenelements (22) vorgesehen ist, und daß eine Gleitschicht (62a) zwischen der genannten inneren Oberfläche des Leerlaufelements (62) und dem genannten äußeren Umfang des genannten ersten Nabenelements (22) und zwischen benachbarten Oberflächen des Leerlaufelements (62) und der Antriebsplatte (30, 31) zwischengefügt ist.

2. Ein Torsionsschwingungsdämpfungsmechanismus wie in Anspruch 1 angegeben, worin mindestens eine der genannten gehärteten Schichten (21b, 29a, 63a) durch stromlose Vernickelung gebildet ist.

3. Ein Torsionsschwingungsdämpfungsmechanismus wie in Anspruch 1 angegeben, worin mindestens eine der genannten gehärteten Schichten (29a, 63a) durch ein Kugelstrahlverfahren gebildet ist.

4. Ein Torsionsschwingungsdämpfungsmechanismus wie in irgendeinem der Ansprüche 1 bis 3 angegeben, worin die genannte zweite Torsionsschwingungsdämpfungseinrichtung eine Einrichtung zum Begrenzen des Winkelbereichs der relativen Verschiebung zwischen dem genannten ersten und dem genannten zweiten Nabenelement (22, 21) innerhalb des genannten zweiten Winkelbereichs einschließt, wobei die Begrenzungseinrichtung für den Winkelbereich einen ersten Vorsprung, der sich von dem genannten ersten Nabenelement erstreckt, und einen zweiten Vorsprungs umfaßt, der sich von dem genannten zweiten Nabenelement erstreckt, wobei der erste und zweite Vorsprung (21a, 22a) ineinander eingreifbare Randoberflächen an dem Ende des Winkelbereiches der relativen Verschiebung aufweisen, und eine gehärtete Schicht (21b) auf den genannten Randoberflächen des genannten ersten und zweiten Vorsprungs (21a, 22a) gebildet ist.

5. Ein Torsionsschwingungsdämpfungsmechanismus wie in Anspruch 4 angegeben, worin der genannte zweite Vorsprung (22a) eine Querdicke größer als die des genannten ersten Vorsprungs (21a) hat.

## Revendications

1. Dispositif d'amortissement de vibrations de torsion dans un ensemble de disque d'embrayage comprenant : une plaque d'entraînement (30, 31) comportant un moyen (40) accouplé relâchablement à une source de couple d'entraînement pour être entraîné en rotation par le couple de sortie de ladite source de couple d'entraînement pendant qu'il est accouplé avec celle-ci ; un premier élément de moyeu (22) associé à friction à ladite plaque d'entraînement (30, 31) pour une rotation avec celle-ci ; un organe fou (62) associé audit premier élément de moyeu (22) pour une rotation avec celui-ci ; un premier mécanisme d'amortissement des vibrations de torsion prévu entre ledit premier élément de moyeu (22) et ledit organe fou (62) pour permettre un déplacement angulaire respectif entre ceux-ci dans une première plage angulaire prédéterminée, ledit premier mécanisme d'amortissement des vibrations de torsion incluant un premier élément élastique (60, 61) comportant une première caractéristique élastique ; un deuxième élément de moyeu (21) associé rigidement à un arbre de sortie par lequel un couple d'entraînement de ladite source de couple d'entraînement est transmis à une charge externe et associé à friction audit premier élément de moyeu (22) de façon à être entraîné en rotation en accord avec la rotation de ce dernier ; un deuxième mécanisme d'amortissement de vibrations de torsion interposé entre lesdits premier et deuxième éléments de moyeux (22, 21) pour permettre un déplacement angulaire respectif entre lesdits premier et deuxième éléments de moyeux (22, 21) dans une deuxième plage angulaire prédéterminée qui est plus petite que ladite première plage angulaire prédéterminée, ledit deuxième mécanisme d'amortissement des vibrations de torsion incluant un deuxième élément élastique (23) comportant une deuxième caractéristique élastique qui est plus petite que ladite première caractéristique élastique ; où ledit organe fou (62) et ledit premier élément de moyeu (22) ont des première et deuxième surfaces de siège de ressort opposées suivant une relation espacée l'une à l'autre sur lesquelles les extrémités respectives dudit premier élément élastique (60, 61) sont logées ; et où ledit organe fou (62) comporte une surface intérieure appariée à la périphérie extérieure dudit premier élément de moyeu (22) ; caractérisé en ce qu'une couche durcie (21b) est prévue sur au moins une des surfaces appariées desdits premier et deuxième éléments de moyeu (22, 21) ; en ce qu'une couche durcie (29a, 63a) est prévue sur lesdites surfaces de siège de ressort de l'organe fou (62) et du premier élément de moyeu (22), et en ce qu'une couche de lubrification (62a) est interposée entre ladite surface intérieure de l'organe fou (62) et ladite périphérie extérieure dudit premier élément de moyeu (22), et entre des surfaces adjacentes de l'organe fou (62) et de la plaque d'entraînement (30, 31).

2. Mécanisme d'amortissement des vibrations de torsion selon la revendication 1, où au moins une desdites couches durcies (21b, 29a, 63a) est réalisée par plaquage autocatalytique au nickel.

3. Mécanisme d'amortissement des vibrations de torsion selon la revendication 1, où au moins une desdites couches durcies (29a, 63a) est réalisée par un procédé de grenaillage.

4. Mécanisme d'amortissement des vibrations de torsion selon l'une des revendications 1 à 3, où ledit deuxième moyen d'amortissement des vibrations de torsion comporte un moyen pour limiter la plage angulaire de déplacement respectif entre lesdits premier et deuxième éléments de moyeu (22, 21) dans ladite deuxième plage angulaire, ledit moyen de limitation de plage angulaire comprend une première saillie s'étendant dudit premier élément de moyeu et une deuxième saillie s'étendant dudit deuxième élément de moyeu, lesdites première et deuxième saillies (21a, 22a) présentent des surfaces de bord pouvant être mises en prise l'une avec l'autre à la fin de la plage angulaire de déplacement respectif, et une couche durcie (21b) est formée sur lesdites surfaces de bord desdites première et deuxième saillies (21a, 22a).

5. Mécanisme d'amortissement des vibrations de torsion selon la revendication 4, où ladite deuxième saillie (22a) a une épaisseur transversale qui est plus grande que celle de ladite première saillie (21a).
